# EUROPEAN PATENT APPLICATION

(11) **EP 4 250 594 A1**
(43) Date of publication of application: **27.09.2023**
(21) Application number: 23162153.3
(22) Date of filing: 15.03.2023
(51) Int. Cl.: H04B 7/185

(54) **SCHEMES ON EPOCH TIME INDICATION IN NON-TERRESTRIAL NETWORK (NTN)**

(30) Priority: 23.03.2022 WO PCT/CN2022/082524; 17.06.2022 WO PCT/CN2022/099521; 22.02.2023 CN 202310152705
(71) Applicant: MediaTek Singapore Pte. Ltd., Singapore 138628 (SG)
(72) Inventor: TANG, Wen, Beijing (CN); CHARBIT, Gilles, Cambridge (GB); WANG, Xuan, Shanghai (CN); JIE, Mingwei, Shanghai (CN); ZHU, Xuancheng, Shanghai (CN); MEDLES, Abdelkader, Cambridge (GB)
(74) Representative: Hoefer & Partner Patentanwälte mbB

(57) **Abstract**

Apparatus and methods are provided for determining epoch time in an NTN system resolving the SFN wrapping issue. In one novel aspect, the UE obtains epoch time information (901), determines the epoch-time SFN by selecting one SFN instance with the SFN value indicated in the epoch time information based on one or more epoch-time rules, wherein the epoch-time rules resolve epoch-time SFN ambiguity indicated by the received epoch time information (902), and derives the epoch time based on the determined epoch-time SFN (903). In one embodiment, the epoch-time SFN is determined based on the receiving-SFN/SIBx and the SFN value of the epoch-time. The epoch-time SFN is a current or next upcoming SFN with the epoch-time SFN value after the receiving-SFN. The epoch-time SFN is a nearest SFN to the receiving-SFN with the epoch-time SFN value.

## Description

### TECHNICAL FIELD

The disclosed embodiments relate generally to wireless communication, and, more particularly, to epoch time indication in non-terrestrial network (NTN).

### BACKGROUND

In NTN (Non-Terrestrial Network) system, due to large time delay and Doppler frequency shift, network needs to indicate ephemeris related parameters to facilitate UE to do pre-compensation of time delay and frequency offset. Moreover, ephemeris information has a validity timer and network indicates epoch time to indicate the starting position of the validity timer. When network explicitly indicates epoch time in SIB or indicates epoch time by dedicated signaling, where network directly sends specific SFN (System Frame Number) and sub frame number, there will be system failure caused by network and UE have inconsistent understanding of SFN (in the past or in the future). Besides, considering there may be accumulation across SI windows in some NTN scenarios, e.g., IoT NTN, the implicitly indication and explicitly indication of epoch time also have the issues that there will be system failure caused by network and UE have inconsistent understanding on deciding epoch time across SI windows.

Improvements and enhancements are required for solve the ambiguity issue for epoch time indication in the NTN system.

### SUMMARY

Apparatus and methods are provided for determining epoch time in an NTN system resolving the SFN wrapping issue. A method and a user equipment according to the invention are defined in the independent claims. The dependent claims define preferred embodiments thereof. In one novel aspect, the UE obtains epoch time information, wherein an epoch time is represented by an epoch-time system frame number (SFN) and an epoch-time subframe number, wherein the epoch time information indicates an SFN value with a plurality of SFN instances in a plurality of corresponding SFN wrap-arounds, determines the epoch-time SFN by selecting one SFN instance with the SFN value indicated in the epoch time information based on one or more epoch-time rules, wherein the epoch-time rules resolve epoch-time SFN ambiguity indicated by the received epoch time information, and derives the epoch time based on the determined epoch-time SFN. Preferably, an epoch-time SFN value of the epoch-time and the epoch-time subframe number are explicitly included in at least one signaling message, from the NTN wireless system, and wherein the signaling message indicating the epoch-time SFN value is received at an SFN frame of receiving-SFN. Preferably, the epoch-time SFN is determined based on the receiving-SFN and the SFN value of the epoch-time. Preferably, the epoch-time rule is position-based. The epoch-time SFN is a current or next upcoming SFN with the epoch-time SFN value after the receiving-SFN. Alternatively or additionally preferably, the epoch-time rule is distance-based. The epoch-time SFN is a nearest SFN to the receiving-SFN with the epoch-time SFN value. Preferably, the position-based rule is used for the serving cells. Preferably, the distance-based rule is used for the neighboring cells. Preferably, a plurality of system information (SI) windows are configured for SIB repetition transmission, and wherein the SIBx SFN is a frame where the epoch-time SFN is indicated from a preconfigured SI window in the plurality of SI windows, and wherein the preconfigured SI window is one selecting from a first SI window, a last SI window, and a predefined SI window. Alternatively or additionally preferably, a hyper-SFN (HSFN) is included in the epoch-time information received from the NTN wireless system, and wherein the epoch-time SFN is determined based on the received HSFN and the epoch-time SFN value. Further alternatively or additionally preferably, the epoch-time information is implicitly indicated by a starting time of a downlink (DL) subframe corresponding to an end of an epoch-time reference SI window. Preferably, a plurality of system information (SI) windows are configured to be accumulated, and wherein the epoch-time SFN is a starting frame of the DL in a preconfigured SI window, and wherein the preconfigured SI window is one selecting from a first SI window, a last SI window, and a predefined SI window.

This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates a schematic system diagram illustrating an exemplary NTN system that resolves the issue for epoch time ambiguity issues in accordance with embodiments of the current invention.
Figure 2 illustrates exemplary diagrams for solving epoch time ambiguity issues due to SFN wrapping in the NTN system in accordance with embodiments of the current invention.
Figure 3 illustrates exemplary diagrams for explicit indication of epoch time in NR NTN in accordance with embodiments of the current invention.
Figure 4 illustrates exemplary diagrams for explicit indication of epoch time in IoT NTN in accordance with embodiment of the current invention.
Figure 5 illustrates exemplary diagrams for implicit indication of epoch time in IoT NTN in accordance with embodiment of the current invention.
Figure 6 illustrates exemplary diagrams for determining the epoch time SFN based on epoch-time SFN and receiving SFN/SIBx SFN in accordance with embodiment of the current invention.
Figure 7 illustrates exemplary diagrams for a position-based epoch-time rule to determine the epoch-time SFN in accordance with embodiment of the current invention.
Figure 8 illustrates exemplary diagrams for a distance-based epoch-time rule to determine the epoch-time SFN in accordance with embodiment of the current invention.
Figure 9 illustrates a flow chart for determining the epoch time in NTN in accordance with embodiments of the current invention.
Figure 10 illustrates a flow chart for configuring the epoch time by the base station in NTN in accordance with embodiments of the current invention.

### DETAILED DESCRIPTION

Reference will now be made in detail to some embodiments of the invention, examples of which are illustrated in the accompanying drawings.

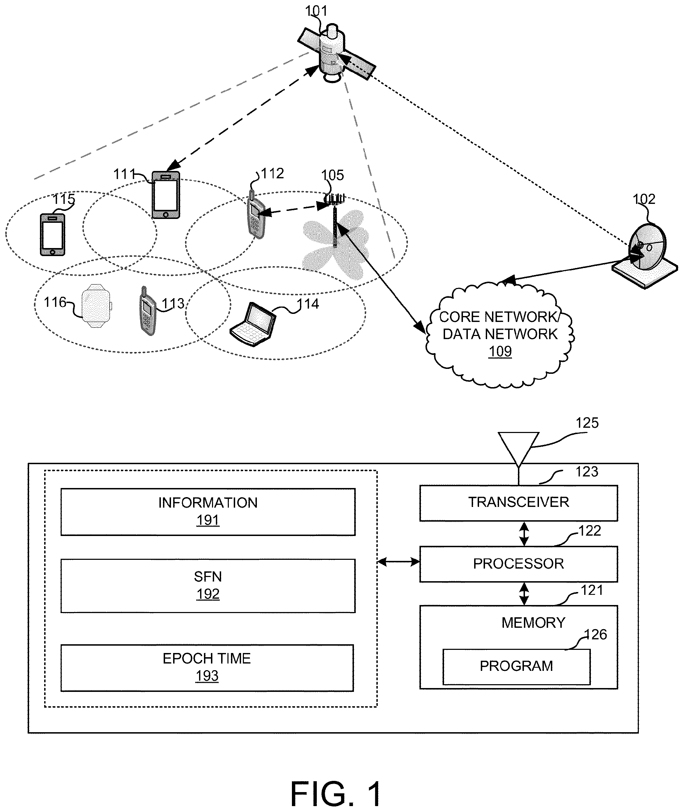

Figure 1 illustrates a schematic system diagram illustrating an exemplary NTN system that resolves the issue for epoch time ambiguity in accordance with embodiments of the current invention. NTN refers to a network that uses radio frequency and information processing resources carried on high, medium and low orbit satellites, such as satellite 101, or other high-altitude communication platforms to provide communication services for UEs. According to the load capacity on the satellite, there are two typical scenarios: transparent payload and regenerative payload. The transparent payload mode means that the satellite will not process the signal and waveform in the communication service, but only forward the data as an RF amplifier. Regenerative payload mode refers to the satellite, besides RF amplification, also has the processing capabilities of modulation/demodulation, coding/decoding, switching, routing and so on. The NTN system includes multiple communication devices or mobile stations, such as mobile phones, tablets, laptops, and other 5G devices whether movable, mobile, or stationary, as exemplary illustrated UEs 111, 112, 113, 114, 115, and 116. The UE in the NTN can establish a communication link with one or more network devices, i.e., NTN nodes, or NR base stations. For example, various NTN nodes 101, NTN gateway 102, and an NR base station 105. The network node can be a communication node, such as radio access network (RAN) such as a 5G base station (gNB), an evolved universal mobile telecommunications system (UMTS), a terrestrial radio access (E-UTRA), an enhanced 4G eNodeB E-UTRA base station (eNB), e.g., an enhanced Node B, an enhanced gNB (en-gNB), or a next generation eNB (ng-eNB). The NTN node can be implemented using various non-terrestrial systems. Core network/data network 109 can be a homogeneous network or heterogeneous network, which can be deployed with the same frequency or different frequencies.

Figure 1 further illustrates simplified block diagrams of a mobile device/UE to perform epoch time determination in NTN. The UE has an antenna 125, which transmits and receives radio signals. An RF transceiver circuit 123, coupled with the antenna, receives RF signals from antenna 125, converts them to baseband signals, and sends them to processor 122. Preferably, the RF transceiver may comprise two RF modules (not shown). RF transceiver 123 also converts received baseband signals from processor 122, converts them to RF signals, and sends out to antenna 125. Processor 122 processes the received baseband signals and invokes different functional modules to perform features in the UE. Memory 121 stores program instructions and data 126 to control the operations of the UE. Antenna 125 sends uplink transmission and receives downlink transmissions to/from base stations.

The UE also includes a set of control modules that carry out functional tasks. These control modules can be implemented by circuits, software, firmware, or a combination of them. An information module 191 obtains epoch time information in the NTN wireless system, wherein an epoch time is represented by an epoch-time system frame number (SFN) and an epoch-time subframe number, wherein the epoch time information indicates an SFN value with a plurality of SFN instances in a plurality of corresponding SFN wrap-arounds. An SFN module 192 determines the epoch-time SFN by selecting one SFN instance with the SFN value indicated in the epoch time information based on one or more epoch-time rules, wherein the epoch-time rules resolve epoch-time SFN ambiguity indicated by the received epoch time information. Epoch time module 193 derives the epoch time based on the determined epoch-time SFN.

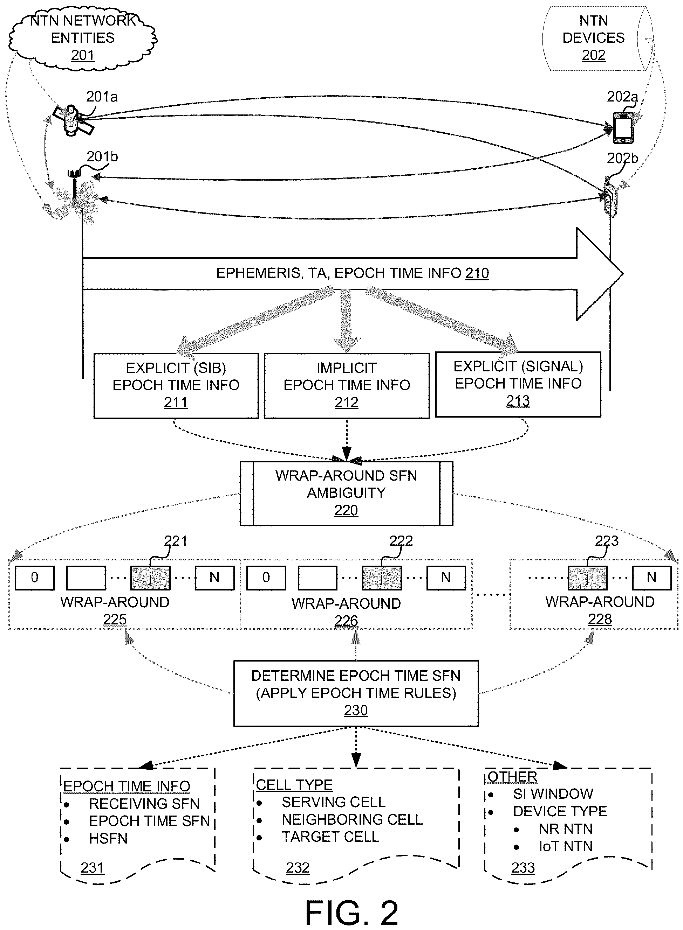

Figure 2 illustrates exemplary diagrams for solving epoch time ambiguity issues due to SFN wrapping in the NTN system in accordance with embodiments of the current invention. In the NTN system, NTN network entities 201 communicate with NTN devices 202. NTN system provides multiple services and can include new radio (NR) NTN, Internet of Things (IoT) NTN and other services. The NTN device may be a NR NTN device 202a and/or an IoT NTN device 202b. NTN devices may directly communicate with NTN network entities through a satellite 201a and/or gNB 201b. In order to ensure the normal operation of NTN system, at step 210, gNB needs to indicate ephemeris related information, validity timer for ephemeris related information, and epoch time is the starting time of a DL sub-frame as starting point of validity timer. In 3GPP, the indication mode of epoch time has been discussed and relevant agreements have been obtained. For the indication of epoch time, there are three modes. Mode 1 (211): When explicitly provided through SIB, Epoch time of assistance information (i.e., Serving satellite ephemeris and Common TA parameters) is the starting time of a DL sub-frame, indicated by a SFN and a sub-frame number signaled together with the assistance information. Mode 2 (212): When Epoch time is not explicitly indicated in SIB, epoch time of assistance information (i.e., Serving satellite ephemeris and Common TA parameters) is implicitly known as the end of the SI window during which the NTN-specific SIB is transmitted. Mode 3 (213): When provided through dedicated signaling, epoch time of assistance information (i.e., Serving satellite ephemeris and Common TA parameters) is the starting time of a DL sub-frame, indicated by a SFN and a sub-frame number.

When the UE obtains epoch time information implicitly or explicitly, the UE needs to determine the epoch-time SFN (in the past or in the future). SFN is used for paging groups and system information scheduling etc. In legacy LTE/NR, the time unit of synchronization between UE and network is SFN. One SFN is 10ms and the SFN value range is 0-1023. When the SFN reaches #1023, it restarts from #0. The maximum period of SFN cycle is #1024 SFN = 10240ms = 10.24s. In general, an epoch time SFN indication is obtained by the UE with a SFN value of j. Since the SFN wraps around in maximum number of N, due to the long delay in the NTN network, there are multiple possible SFN instances with the same SFN value j. For instance, SFN wrap-around 225, 226, and 228 all have an SFN instance with SFN value of j, such as 221, 222, and 223. The SFN ambiguity issue (220) exists for implicit and explicit epoch time information. In one novel aspect, the UE obtains the epoch time information, and, as in step 230, determines the epoch-time SFN by selecting one SFN instance with the SFN value indicated in the epoch time information based on one or more epoch-time rules, wherein the epoch-time rules resolve epoch-time SFN ambiguity indicated by the received epoch time information. In one implementation 231, the epoch-time SFN is determined by one or more elements including receiving-SFN and the SFN value of the epoch time. The receiving-SFN is an SFN frame that contains the signaling message indicating the epoch-time SFN value. The receiving-SFN can be a SIBx SFN, where the SIB carries the epoch-time information at SFN frame SIBx. The epoch-time SFN may be further based on the hyper-SFN number. In another alternative or additional implementation 232, the epoch-time SFN rule may further be based on other factors such as the cell types, such as serving cell, neighboring cell, or target and serving cells for handover cases. In a further alternative or additional implementation 233, other factors may be used for the epoch-time rule, such as the SI window configuration and device types, such as NR NTN or IoT NTN.

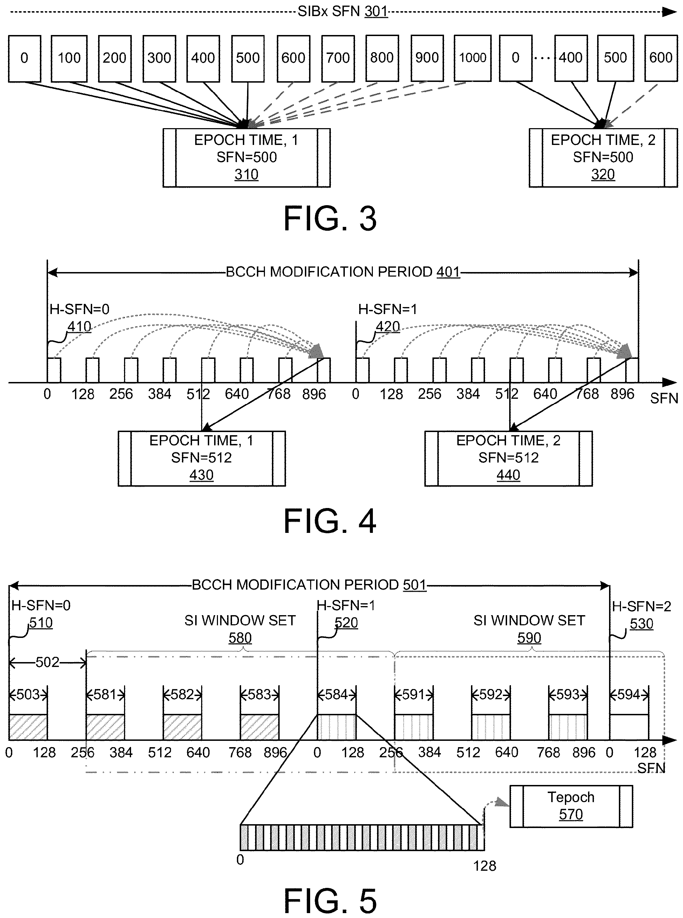

Figure 3 illustrates exemplary diagrams for explicit indication of epoch time in NR NTN in accordance with embodiments of the current invention. The present mode 1 and mode 3 in 3GPP to indicate epoch time explicitly by SIB or by dedicated signaling has SFN wrapping issues. Exemplary SIBx SFN 301 wraps around with #1023. For instance 310, the gNB indicates an SFN=x (500) that is in the future, while UE assumes epoch time x is in the past. When UE reads SIBx with ephemeris and common TA parameters at time t and does prediction to obtain ephemeris and related time and frequency parameters from epoch time in the past to time t, then this assumption is wrong. Because SFN=x is in the future and UE should do UE prediction backwards from epoch time to time t. Similarly for instance 320, the epoch-time SFN explicitly indicated in SIBx needs to resolved to determine whether the epoch-time SFN is the current, the past, or the upcoming SFN instance with the indicated SFN value. In one novel aspect, the SIBx SFN and the epoch-time SFN value are used to determine the epoch-time SFN. Preferably, the relative position/value of the SIBx SFN and the epoch-time SFN is used to determine which SFN instance to use for the epoch-time. Alternatively or additionally preferably, the distance between the SIBx SFN and potential epoch-time SFN instances are used to determine the epoch-time SFN.

Figure 4 illustrates exemplary diagrams for explicit indication of epoch time in IoT NTN in accordance with embodiment of the current invention. As an example, the BCCH modification period 401 includes two H-SFN, H-SFN 410 with H-SFN=0, and H-SFN 420 with H-SFN=1. Epoch-time SFN information 430 has ambiguity issues similar to the NR NTN explicit epoch-time information. Similarly, Epoch-time SFN information 440 has ambiguity issues. In one novel aspect, the receiving SFN and the epoch-time SFN value are used to determine the epoch-time SFN. Preferably, the relative position/value of the receiving SFN and the epoch-time SFN is used to determine which SFN instance to use for the epoch-time. Alternatively or additionally preferably, the distance between the receiving SFN and potential epoch-time SFN instances are used to determine the epoch-time SFN.

Figure 5 illustrates exemplary diagrams for implicit indication of epoch time in IoT NTN in accordance with embodiment of the current invention. As an example, the BCCH modification period 501 includes three H-SFN, H-SFN 510 with H-SFN=0, H-SFN 520 with H-SFN=1, and H-SFN 530 with H-SFN=2. For some system, such as IoT, a set of SI windows are configured with a plurality of SI windows, where the SIB is transmitted repeatedly. For example, SI window 503 is configured with a SI periodicity 502. SI window set 580 includes a plurality of SI windows including SI windows 581, 582, 583, and 584. SI window set 590 includes a plurality of SI windows include SI windows 591, 592, 593, and 594. Considering repetitions in SI window and cross SI windows in IoT NTN, the present mode-1, mode-2, mode-3 in 3GPP to indicate epoch time has ambiguity issues. For instance, the network indicates an epoch time T_epoch 570, as the end of SI window 584, while UE decodes SIB in SI window 591. Then UE will take the end of SI window 591 as epoch time which will cause wrong prediction on ephemeris related information. Preferably, a plurality of SI windows are configured to be accumulated, and wherein the epoch-time SFN is a starting frame of the DL in a preconfigured SI window, and wherein the preconfigured SI window is one selecting from a first SI window, a last SI window, and a predefined SI window. When Epoch time is not explicitly indicated in SIB, epoch time of assistance information (i.e., Serving satellite ephemeris and Common TA parameters) is implicitly known as the starting time of the DL subframe which is the end of the x SI window in the set of SI window, such as SI window set 590, that can be accumulated during which the NTN-specific SIB is transmitted. Preferably, the x is the first SI window in the SI window set, such as SI window 591. Alternatively preferably, the x is the last SI window in the SI window set, such as SI window 594. Alternatively preferably, when explicitly provided through SIB, epoch time of assistance information (i.e. Serving satellite ephemeris and Common TA parameters) is the starting time of a DL sub-frame, indicated by a HSFN, a SFN and a sub-frame number signaled together with the assistance information. Epoch time is the starting time of the indicated sub-frame number of the Epoch time SFN.

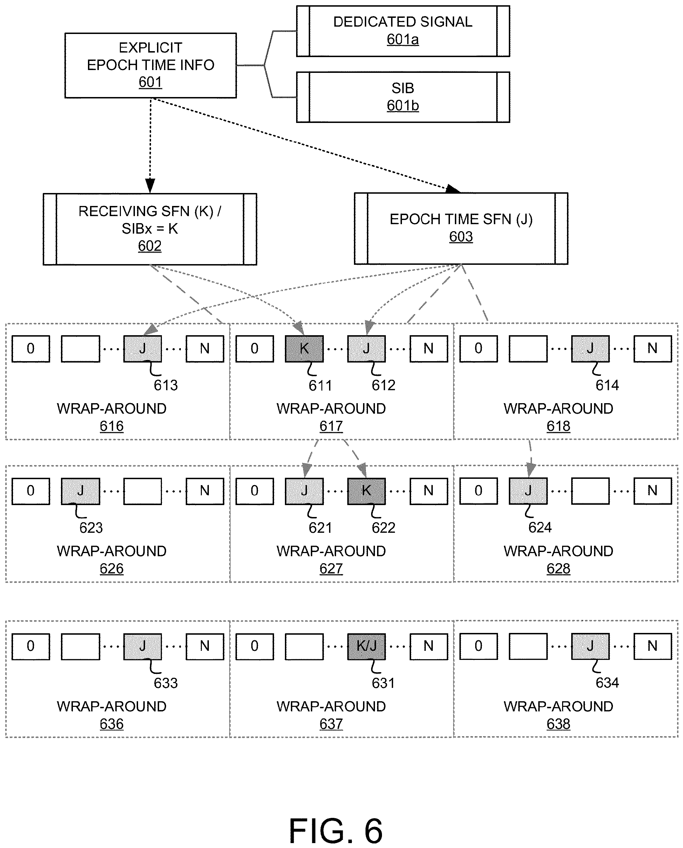

Figure 6 illustrates exemplary diagrams for determining the epoch time SFN based on epoch-time SFN values and receiving SFN/SIBx SFN in accordance with embodiment of the current invention. In one implementation 601, explicit epoch time information is received. The explicit epoch time information may be received from a dedicated signal (601a), or SIB (601b). In one alternative or additional implementation, epoch-time SFN is determined based on the receiving-SFN (K)/SIBx SFN=K 602 and the SFN value J 603 of the epoch-time. In one alternative or additional implementation, the epoch time SFN is determined based on the SIBx SFN/receiving SFN K and the indicated SFN value J. Three scenarios are illustrated. The SFN value of epoch time indicated J 612 is greater than SIBx SFN/receiving SFN K 611, which are both in SFN wrap around 617. SFN wrap around 616 includes SFN instance 613 with the SFN value J. SFN wrap around 618 includes SFN instance 614 with the SFN value J. The ambiguity may exist between 613 and 612. In another scenario, the SFN value of epoch time indicated J 621 is smaller than SIBx SFN/receiving SFN K 622, which are both in SFN wrap around 627. SFN wrap around 626 includes SFN instance 623 with the SFN value J. SFN wrap around 628 includes SFN instance 624 with the SFN value J. The ambiguity may exist between 621 and 624. In another scenario, the SFN value of epoch time indicated J 631 is the same SFN K, which are both in SFN wrap around 637. SFN wrap around 636 has SFN instance 633 with the same SFN value J. SFN wrap around 638 has SFN instance 634 with the same SFN value J. The ambiguity may still arise from 631, 633 and 634.

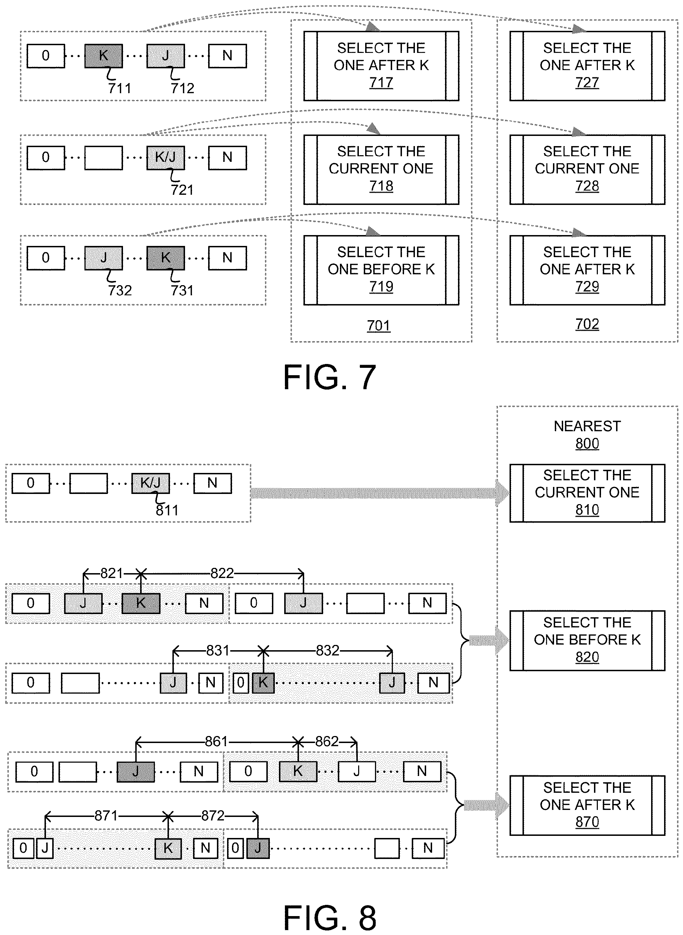

Figure 7 illustrates exemplary diagrams for a position-based epoch-time rule to determine the epoch-time SFN in accordance with embodiments of the current invention. Preferably, when the SNF value of epoch time is explicitly received, the epoch time rule determines the epoch-time SFN based on the value/position of the SIBx SFN/receiving SFN and the indicated epoch time SFN value.

In one implementation 701, the SFN instances are selected as the current, past or upcoming based on the value of K and J. When SIBx SFN/receiving SFN K 711 is smaller than the epoch time indicated SFN value J 712, as in step 717, the UE selects the upcoming SFN instance with indicated SFN value J. When SIBx SFN/receiving SFN K 721 is the same as the epoch time indicated SFN value J 721, as in step 718, the UE selects the current SFN. When SIBx SFN/receiving SFN K 731 is greater than the epoch time indicated SFN value J 732, as in step 719, the UE selects the past SFN instance with indicated SFN value J. In a detailed illustrated example, for NR NTN: Indicated SFN for epoch time is
- if (epoch time SFN- SIBx SFN) is positive, choose next epoch time after SIBx SFN (i.e. SFN for epoch time is in the future);
- else if (epoch time SFN- SIBx SFN) is negative, choose previous epoch time before SIBx SFN (i.e. SFN for epoch time is in the past);
- else if (epoch time SFN- SIBx SFN) is zero, choose current epoch time SFN (SIBx SFN).

SIBx SFN is the frame where the message indicating the Epoch time is received. Preferably, SIBx SFN is the last frame where the message indicating the Epoch time is received.

In another detailed illustrated example, for IoT NTN: Indicated SFN for epoch time is
- if (epoch time SFN- SIBx SFN) is positive, choose next epoch time after SIBx SFN (i.e. SFN for epoch time is in the future);
- else if (epoch time SFN- SIBx SFN) is negative, choose previous epoch time before SIBx SFN (i.e. SFN for epoch time is in the past);
- else if (epoch time SFN- SIBx SFN) is zero, choose current epoch time SFN (SIBx SFN).

SIBx SFN is the frame where the message indicating the Epoch time is received. Preferably, SIBx SFN is the last frame where the message indicating the Epoch time is received. The UE shall not assume that the NTN-specific SIB is constant across SI windows.

In another implementation 702, also using the position-based epoch time rule, the epoch-time SFN is a current or next upcoming SFN with the epoch-time SFN value after the receiving-SFN. When SIBx SFN/receiving SFN K 711 is smaller than the epoch time indicated SFN value J 712, as in step 727, the UE selects the upcoming SFN instance with indicated SFN value J. When SIBx SFN/receiving SFN K 721 is the same as the epoch time indicated SFN value J 721, as in step 728, the UE selects the current SFN. When SIBx SFN/receiving SFN K 731 is greater than the epoch time indicated SFN value J 732, as in step 729, the UE selects the upcoming SFN instance with indicated SFN value J. Preferably, the position-based epoch time rule is used for the serving cell.

Figure 8 illustrates exemplary diagrams for a distance-based epoch-time rule to determine the epoch-time SFN in accordance with embodiment of the current invention. In one implementation 800, epoch-time SFN is a nearest SFN to the receiving-SFN/SIBx SFN with the epoch-time SFN value. When SIBx SFN/receiving SFN K 811 is the same as the epoch time indicated SFN value J 811, as in step 810, the current SFN is selected. When K and J are not the same, the UE selects the SFN instance with the indicated SFN value J that is closest to the receiving SFN/SIBx SFN. When K is greater than J and distance 821 between the past SFN with value J and K is smaller than distance 822 between the upcoming with value J and K, at step 820, the UE selects the past SFN. When K is smaller than J and distance 831 between the past SFN with value J and K is smaller than distance 832 between the upcoming with value J and K, at step 820, the UE selects the past SFN. When K is smaller than J and distance 862 between the upcoming SFN with value J and K is smaller than distance 861 between the past SFN with value J and K, at step 870, the UE selects the upcoming SFN. When K is greater than J and distance 872 between the upcoming SFN with value J and K is smaller than distance 871 between the past SFN with value J and K, at step 870, the UE selects the upcoming SFN. Preferably, with equal distance, the UE selects the upcoming SFN.

Using maximum SFN N=1024, a more detailed illustration for NR NTN indicates epoch time explicitly by SIB or by dedicated signaling.
- If (SFN_received-Epoch time SFN) is not less than 0, m = SFN_received-Epoch time SFN; else if (SFN_received-Epoch time SFN) is less than 0, m = SFN_received-Epoch time SFN + 1024.
- Indicated epoch time SFN is:
- if 512<=m<1024, choose next Epoch time SFN after SFN_received (i.e. SFN for epoch time is in the future);
- else if 0<m<512, choose previous Epoch time SFN before SFN_received (i.e. SFN for epoch time is in the past);
- else if m=0, choose current Epoch time SFN (SFN _received).

SFN_received is the frame where the message indicating the Epoch time is received. Preferably, SFN_received is the last frame where the message indicating the Epoch time is received. Epoch time is the starting time of the indicated Epoch time SFN and sub-frame number.

Using maximum SFN N=1024, a more detailed illustration for IoT NTN indicates epoch time explicitly by dedicated signaling.
- If (SFN_received-Epoch time SFN) is not less than 0, m = SFN_received-Epoch time SFN; else if (SFN_received-Epoch time SFN) is less than 0, m = SFN_received-Epoch time SFN + 1024.
- Indicated epoch time SFN is:
- if 512<=m<1024, choose next Epoch time SFN after SFN_received (i.e. SFN for epoch time is in the future);
- else if 0<m<512, choose previous Epoch time SFN before SFN_received (i.e. SFN for epoch time is in the past);
- else if m=0, choose current Epoch time SFN (SFN _received).

SFN_received is the last frame of the X SI window in the set of SI window that can be accumulated where the message indicating the Epoch time is received. X can be the first SI window in the set of SI window, the last SI window in the set of SI window, or the predefined SI window in the set of SI window.

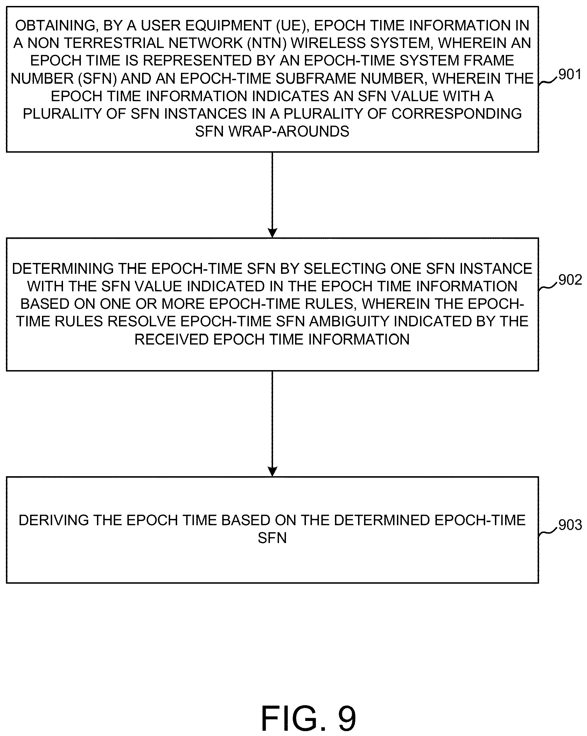

Figure 9 illustrates a flow chart for determining the epoch time in NTN in accordance with embodiments of the current invention. At step 901, the UE obtains epoch time information in a non-terrestrial network (NTN) wireless system, wherein an epoch time is represented by an epoch-time system frame number (SFN) and an epoch-time subframe number, wherein the epoch time information indicates an SFN value with a plurality of SFN instances in a plurality of corresponding SFN wrap-arounds. At step 902, the UE determines the epoch-time SFN by selecting one SFN instance with the SFN value indicated in the epoch time information based on one or more epoch-time rules, wherein the one or more epoch-time rules resolve epoch-time SFN ambiguity indicated by the received epoch time information. At step 903, the UE derives the epoch time based on the determined epoch-time SFN.

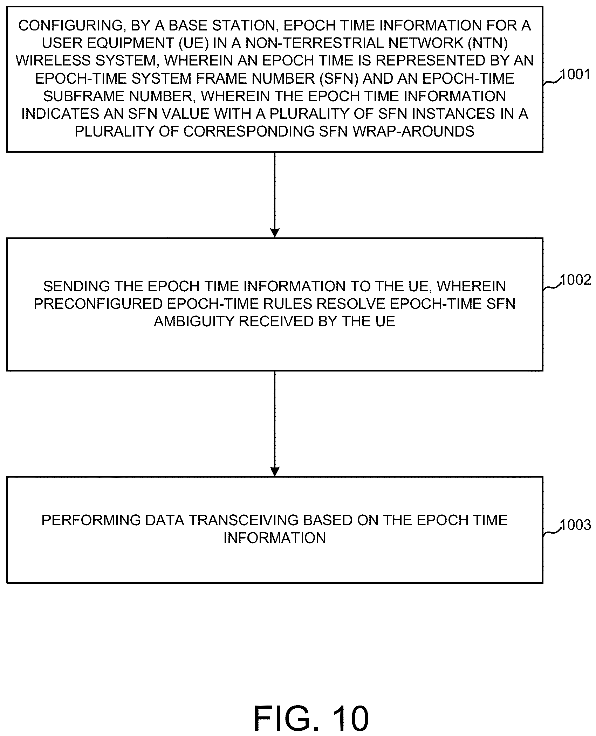

Figure 10 illustrates a flow chart for configuring the epoch time by the base station in NTN in accordance with embodiments of the current invention. At step 1001, the base station configures epoch time information for a user equipment (UE) in a non-terrestrial network (NTN) wireless system, wherein an epoch time is represented by an epoch-time system frame number (SFN) and an epoch-time subframe number, wherein the epoch time information indicates an SFN value with a plurality of SFN instances in a plurality of corresponding SFN wrap-arounds. At step 1002, the base station sends the epoch time information to the UE, wherein preconfigured epoch-time rules resolve epoch-time SFN ambiguity received. At step 1003, the base station performs data transceiving based on the epoch time information.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
obtaining, by a user equipment, in the following also referred to as UE, epoch time information in a non-terrestrial network, in the following also referred to as NTN, wireless system, wherein an epoch time is represented by an epoch-time system frame number, in the following also referred to as SFN, and an epoch-time subframe number, wherein the epoch time information indicates an SFN value with a plurality of SFN instances in a plurality of corresponding SFN wrap-arounds (901);
determining the epoch-time SFN by selecting one SFN instance with the SFN value indicated in the epoch time information based on one or more epoch-time rules, wherein the one or more epoch-time rules resolve epoch-time SFN ambiguity indicated by the received epoch time information (902); and
deriving the epoch time based on the determined epoch-time SFN (903).

2. The method of claim 1, wherein an epoch-time SFN value of the epoch-time and the epoch-time subframe number are explicitly included in at least one signaling message, from the NTN wireless system, and wherein a receiving-SFN is a last frame where the epoch-time SFN is indicated or is indicated in the signaling message being an SFN frame where the epoch-time SFN value is received.

3. The method of claim 2, wherein the epoch-time SFN is determined based on the receiving-SFN and the SFN value of the epoch-time.

4. The method of claim 2 or 3, wherein the epoch-time SFN is a current or next upcoming SFN with the epoch-time SFN value after the receiving-SFN.

5. The method of claim 4, wherein the epoch time is for a serving cell.

6. The method of claim 2 or 3, wherein the epoch-time SFN is a nearest SFN to the receiving-SFN with the epoch-time SFN value.

7. The method of claim 6, wherein the epoch time is for a neighboring cell.

8. The method of any one of claims 2 to 7, wherein the signaling message is a system information block, in the following also referred to as SIB, with the receiving SFN being a SIBx SFN.

9. The method of claim 8, wherein a plurality of system information, in the following also referred to as SI, windows are configured for SIB repetition transmission, and wherein the SIBx SFN is a frame where the epoch-time SFN is indicated from a preconfigured SI window in the plurality of SI windows, and wherein the preconfigured SI window is one selecting from a first SI window, a last SI window, and a predefined SI window.

10. The method of any one of claims 2 to 9, wherein a hyper-SFN, in the following also referred to as HSFN, is included in the epoch-time information received from the NTN wireless system, and wherein the epoch-time SFN is determined based on the received HSFN and the epoch-time SFN value.

11. The method of any one of claims 1 to 10, wherein the epoch-time information is implicitly indicated by a starting time of a downlink , in the following also referred to as DL, subframe corresponding to an end of an epoch-time reference SI window.

12. The method of claim 11, wherein a plurality of SI windows are configured to be accumulated, and wherein the epoch-time reference SI window is a preconfigured SI window, and wherein the preconfigured SI window is one selecting from a first SI window, a last SI window, and a predefined SI window.

13. A user equipment, in the following also referred to as UE, comprising:
a transceiver (123) that transmits and receives radio frequency, in the following also referred to as RF, signal in a non-terrestrial network (NTN) wireless system;
an information module (191) that obtains epoch time information in the NTN wireless system, wherein an epoch time is represented by an epoch-time system frame number, in the following also referred to as SFN, and an epoch-time subframe number, wherein the epoch time information indicates an SFN value with a plurality of SFN instances in a plurality of corresponding SFN wrap-arounds;
an SFN module (192) that determines the epoch-time SFN by selecting one SFN instance with the SFN value indicated in the epoch time information based on one or more epoch-time rules, wherein the one or more epoch-time rules resolve epoch-time SFN ambiguity indicated by the received epoch time information; and
an epoch time module (193) that derives the epoch time based on the determined epoch-time SFN.

14. The UE of claim 13, wherein an epoch-time SFN value of the epoch-time and the epoch-time subframe number are explicitly included in at least one system information block, in the following also referred to as SIB, from the NTN wireless system, and wherein a SIBx SFN is a last frame where the epoch-time SFN is indicated or a SIBx SFN is an SFN frame where the epoch-time SFN value is received.

15. The UE of claim 14, wherein the epoch-time SFN is determined based on the SIBx SFN and the SFN value of the epoch-time.
